(19) Europäisches Patentamt
European Patent Office
Office européen des brevets

(11) Veröffentlichungsnummer : **0 448 823 B1**

(12) # EUROPÄISCHE PATENTSCHRIFT

(45) Veröffentlichungstag der Patentschrift : **16.02.94 Patentblatt 94/07**

(51) Int. Cl.$^5$ : **B01J 20/32,** C07B 57/00, G01N 30/92, G01N 30/48

(21) Anmeldenummer : **90124921.9**

(22) Anmeldetag : **20.12.90**

(54) **Trennmaterialien.**

Die Akte enthält technische Angaben, die nach dem Eingang der Anmeldung eingereicht wurden und die nicht in dieser Patentschrift enthalten sind.

(30) Priorität : **24.02.90 DE 4005868**

(43) Veröffentlichungstag der Anmeldung : **02.10.91 Patentblatt 91/40**

(45) Bekanntmachung des Hinweises auf die Patenterteilung : **16.02.94 Patentblatt 94/07**

(84) Benannte Vertragsstaaten : **CH DE FR GB LI**

(56) Entgegenhaltungen :
**EP-A- 0 155 637**
**EP-A- 0 218 089**
**DE-A- 2 300 931**
**DE-A- 2 500 523**
**DE-A- 3 338 348**
**JP-A- 6 160 054**

(73) Patentinhaber : **MERCK PATENT GmbH**
**Postfach, Frankfurter Strasse 250**
**D-64271 Darmstadt (DE)**

(72) Erfinder : **Mack, Margot, Dr.**
**Nibelungenstrasse 7**
**W-6149 Fürth 1 (DE)**
Erfinder : **Kinkel, Joachim, Dr.**
**Waldhilbersheimer Strasse 4**
**W-6531 Guldental (DE)**

EP 0 448 823 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Trennmaterialien für die Dünnschichtchromatographie auf Basis von mit Sorptionsmittel beschichteten Trägern, die im wesentlichen aus an Kieselgel gebundenen optisch aktiven Poly(meth)acrylsäureamiden und einem Bindersystem bestehen.

Diese Materialien sind dazu geeignet, racemische Gemische in ihre optischen Antipoden zu trennen.

Adsorbentien auf der Basis optisch aktiver Poly(meth)acrylsäureamide, bei denen diese Amide in an Kieselgel gebundener Form vorliegen, sind aus der DE-OS 36 19 303 bekannt. Die dort beschriebenen Adsorbentien eignen sich für die Säulenchromatographie, insbesondere für die Hochdruckflüssigkeitschromatographie oder auch Gradientenelution. Diese HPLC-Verfahren haben jedoch auch folgende Nachteile:

Es werden aufwendige Geräte benötigt und das Vorbereiten, Durchführen und Optimieren der Verfahren erfordert viel Zeit. Zudem kann in einem Durchgang nur eine Probe analysiert werden. Für Routineanalysen und insbesondere für In-Prozeß-Kontrollen z.B. bei enantioselektiven Synthesen sind die säulenchromatographischen Verfahren daher schlecht geeignet.

Ein Hinweis für die Anwendung der bekannten optisch aktiven Trennmaterialien in der Dünnschicht-Technik ist der DE-OS 36 19 303 nicht zu entnehmen. Es werden dort keinerlei Anregungen gegeben, auf welche Weise eine Übertragung der chiralen Phase auf die Dünnschichtplatte zu bewerkstelligen ist.

Aus der Literatur ist bekannt, daß eine Übertragung chiraler Phasen von der Säule auf die Dünnschichtplatte nicht ohne weiteres möglich ist, weil unter anderem die für die Dünnschicht notwendigen Binder meist einen großen Einfluß auf die Trennung haben. Bestehen Wechselwirkungen zwischen Binder und den chromatographisch aktiven Gruppen, so können diese dazu führen, daß die Wechselwirkungen zwischen den zu trennenden Enantiomeren und den chromatographisch aktiven Gruppen fehlen oder doch so abgeschwächt werden, daß eine Trennung nicht zu erreichen ist.

Die Aufgabe der vorliegenden Erfindung bestand darin, optisch aktive Trennmaterialien für die Dünnschichtchromatographie (DC und HPTLC) herzustellen, die zur Trennung von racemischen Gemischen geeignet sind.

Es wurde nun überraschenderweise gefunden, daß mit Hilfe der erfindungsgemäßen Kombination aus Bindersystem und der chromatographisch aktiven Phase, die aus an Kieselgel gebundenen optisch aktiven Poly(meth)acrylsäureamiden besteht, hervorragende Trennmaterialien für die Dünnschichtchromatographie erhalten werden.

Gegenstand der Erfindung sind daher Trennmaterialien für die Dünnschichtchromatographie auf Basis von mit Sorptionsmittel beschichteten Trägern, dadurch gekennzeichnet, daß das Sorptionsmittel im wesentlichen aus an Kieselgel gebundenen optisch aktiven Poly(meth)acrylsäureamiden und einem Bindersystem, bestehend aus einem Gemisch aus carboxylgruppenhaltigen Polyvinyl- und Acrylsäureester-Polymeren, besteht.

Gegenstand der Erfindung ist auch ein Verfahren zur Herstellung dieser Trennmaterialien, bei dem man das optische aktive Poly(meth)acrylamidderivat-Kieselgel-Verbundmaterial, hergestellt durch Umsetzung von Kieselgel oder hydrophil modifiziertem Kieselgel mit optisch aktiven (Meth)Acrylamidderivaten unter den Bedingungen einer Polymerisationsreaktion, zusammen mit dem Bindersystem, bestehend aus einem Gemisch aus carboxylgruppenhaltigen Polyvinyl- und Acrylsäureester-Polymeren, in einem wäßrigen, organischen oder wäßrig/organischen Medium suspendiert, den pH-Wert der Suspension auf einen Wert zwischen 6,5 und 8,0 eingestellt und diese Suspension nach bekannter Art und Weise auf den Träger aufbringt.

Schließlich ist auch Gegenstand der Erfindung die Verwendung der erfindungsgemäßen Trennmaterialien zur dünnschichtchromatographischen Trennung racemischer Gemische in die optischen Antipoden.

Es können allgemein beliebige optisch aktive Acryl- oder Methacrylsäureamide als Monomere eingesetzt werden, wobei sich das optisch aktive Zentrum in dem Amidrest befindet.

Vorzugsweise werden die optisch aktiven Poly(meth)acrylsäureamide jedoch aus polymerisationsfähigen Monomeren der Formel I

$$CH_2 = CR^1\text{-CO-X} \qquad \text{I}$$

worin

$R^1$ H oder Methyl und

X ein über den Stickstoff gebundener, aliphatischer oder aromatischer Amidrest, enthaltend mindestens ein optisch aktives C-Atom, der auch durch einen weiteren (Meth)Acrylamidrest substituiert sein kann, ein über den Stickstoff gebundenes, optisch aktives Aminosäurederivat
oder
$-NR^2Y$, wobei $R^2$ H oder Alkyl mit bis zu 5 C-Atomen und Y ein Mono- oder Oligosaccharid-Rest bedeutet, hergestellt.

Vorzugsweise bedeutet X in Formel I einen über den Stickstoff gebundenen Amidrest, der sich vom entsprechenden Amin HX ableitet. X hat dabei bevorzugt die Bedeutung der Unterformel Ia

-NR$^3$R$^4$ Ia

worin

| | |
|---|---|
| R$^3$ und R$^4$ | jeweils unabhängig voneinander A, Cycloalkyl mit 3-7 C-Atomen, Cycloalkylalkyl mit 4-11 C-Atomen, Bicycloalkyl mit 7-14 C-Atomen, Bicycloalkylalkyl mit 8-18 C-Atomen, Ar, Ar-alkyl bedeuten, wobei diese Reste ferner ein- oder mehrfach substituiert sein können durch A, Cycloalkyl, Cycloalkylalkyl, Halogen, Cyano, Amino,mono- oder disubstituiertes Amino, Hydroxy und/oder auch durch einen weiteren (Meth)Acrylamidrest, einer der Reste R$^3$ und R$^4$ auch H sein kann, mit der Maßgabe, daß mindestens ein asymmetrisches C-Atom in R$^3$ und/oder R$^4$ enthalten ist, |
| A bzw. -alkyl | Alkyl bzw. Alkylen mit 1-8 C-Atomen, worin gegebenenfalls ein oder zwei nicht benachbarte $CH_2$-Gruppen ersetzt sein können durch -O-, -CO-, -OCO- oder -CO-O-, |
| Ar | Phenyl oder Naphthyl |

bedeuten.

Vorzugsweise ist einer der Reste R$^3$ und R$^4$ H, der andere ein Rest mit einem optischen aktiven C-Atom.

In der vorstehenden Formel Ia hat A 1-8, vorzugsweise 1, 2, 3, 4, 5 oder 6 C-Atome. A bedeutet vorzugsweise Methyl, Ethyl, Propyl, Isopropyl, Butyl, Isobutyl, sek. Butyl, tert. Butyl, Pentyl, 1-, 2- oder 3-Methylbutyl, Hexyl, 1,1-, 1,2- oder 2,2-Dimethylpropyl, 1-Ethylpropyl, 1-, 2-, 3- oder 4-Methylpentyl, 1,1-, 1,2-, 1,3-, 2,2-, 2,3- oder 3,3-Dimethylbutyl, 1- oder 2-Ethylbutyl, 1-Ethyl-1-methylpropyl, 1-Ethyl-2-methylpropyl, 1-Methylhexyl oder 2-Octyl.

Dementsprechend bedeutet -alkyl vorzugsweise Methylen, Ethylen, Propylen, Butylen, Isopropylen, Isobutylen, Pentylen, 1-, 2- oder 3-Methylbutylen, Hexylen, 1,1-, 1,2- oder 2,2-Dimethylpropylen, 1-Ethylpropylen oder 1- oder 2-Ethylbutylen.

Cycloalkyl bedeutet vorzugsweise Cyclopropyl, Cyclobutyl, Cyclopentyl, Cyclohexyl oder Cycloheptyl, aber auch z.B. 1-, 2- oder 3-Methylcyclopentyl, 1-, 2-, 3- oder 4-Methylcyclohexyl, 2-Methyl-5-isopropylcyclohexyl oder auch 2-Isopropyl-5-methylcyclohexyl (=Menthyl bzw. Neomenthylrest).

Dementsprechend bedeutet Cycloalkylalkyl vorzugsweise Cyclopropylmethyl, 1-Cyclopropylethyl, 2-Cyclopropylethyl, Cyclobutylmethyl, 1-Cyclobutylethyl, 2-Cyclobutylethyl, Cyclopentylmethyl, 1-Cyclopentylethyl, 2-Cyclopentylethyl, Cyclohexylmethyl, 1-Cyclohexylethyl, 2-Cyclohexylethyl, aber auch z.B. 1-, 2- oder 3-Methylcyclopentylmethyl, 1-(1-, (2-, (3- oder (4-Methylcyclohexyl)ethyl oder 2-(1-, (2-, (3- oder (4-Methylcyclohexyl)ethyl.

Bicycloalkyl bedeutet vorzugsweise 1- oder 2-Dekalyl, 2-Bicyclo[2.2.1]heptyl oder 6,6-Dimethyl-2-bicyclo-[3.1.1]heptyl.

Halogen bedeutet vorzugsweise F, Cl oder Br, aber auch J.

Ar bedeutet vorzugsweise Phenyl, ferner auch o-, m- oder p-Tolyl, o-, m- oder p-Ethylphenyl, o-, m- oder p-Methoxyphenyl, 1- oder 2-Naphthyl.

Dementsprechend bedeutet Ar-alkyl vorzugsweise Benzyl, 1- oder 2-Phenylethyl, o-, m- oder p-Methylbenzyl, 1-oder 2-o-, -m- oder -p-Tolylethyl, o-, m- oder p-Ethylbenzyl, 1- oder 2-o-, -m- oder -p-Ethylphenylethyl, 1- oder 2-Napthylmethyl oder -ethyl.

Bevorzugt sind auch Verbindungen der Formel I, worin X -NR$^2$Y ist. R$^2$ ist dabei H oder Alkyl mit vorzugsweise 1,2 oder 3 C-Atomen. Y ist ein Mono- oder Oligosaccharid-Rest. Bevorzugt sind Mono- oder Disaccharide, wie z.B. Glucosyl, Arabinosyl, Ribosyl, Galactosyl, Fructosyl, Lactose- oder Saccharose-Reste. Die Hydroxylgruppen können jeweils frei oder geschützt durch z.B. Methyl- oder Acetylgruppen vorliegen. Die Saccharid-Reste können offenkettige oder cyclische Form haben. Als Reste kommen allgemein Pentosen, Hexosen, Di- oder Trisaccharide, oder auch glycosidische Verbindungen in Frage.

Bevorzugt sind auch Verbindungen der Formel I, worin X ein über den Stickstoff gebundenes, optisch aktives Aminosäurederivat, das sich von der entsprechenden Aminosäure ableitet, bedeutet. Vorzugsweise besitzt dieses Derivat bis zu 15 C-Atomen in der Hauptkette.

Als Aminosäurederivate können Ester, Amide, die freien Säuren oder auch am Amidstickstoff substituierte Aminosäureamide eingesetzt werden.

Bevorzugt sind Aminosäurealkylester mit bis zu 7 C-Atomen in der Alkylkette, wobei diese geradkettig oder verzweigt sein kann. Ferner bevorzugt sind Phenylester. Der Substituent an der evtl. vorhandenen Amidgruppe ist vorzugsweise eine Alkylgruppe mit bis zu 7 C-Atomen, die ebenfalls geradkettig oder verzweigt sein kann, oder eine Phenylgruppe. Ferner kommen als Substituenten an einer solchen Aminosäureamidgruppe auch Naphthyl, Benzyl, p-Alkylbenzyl und andere substituierte Phenylgruppen in Frage. Eine Disubstitution am Stickstoff, vorzugsweise durch Alkylgruppen ist ebenfalls möglich.

Alle allgemein bekannten und gängigen optisch aktiven Aminosäuren können hier eingesetzt werden. Insbesondere bevorzugt sind solche Reste, die aus folgenden Aminosäuren stammen: Alanin, Phenylalanin, Phenylglycin, Valin, Leucin, Isoleucin, Serin, Threonin, Asparaginsäure, Asparagin, Glutaminsäure, Glutamin, Lysin, Arginin, Histidin, Tyrosin, Tryptophan oder Ornithin. Vor allem sind die Methyl-, Ethyl- oder Propylester dieser Aminosäuren bevorzugt.

Die eventuell vorhandenen Hydroxy- oder Aminogruppen können in freier oder auch in geschützter Form vorliegen.

Im folgenden ist eine kleinere Gruppe von besonders bevorzugten Verbindungen der Formel I angegeben.

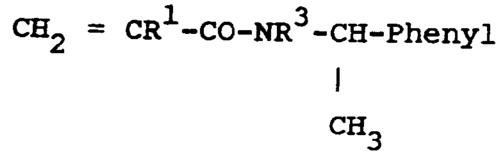

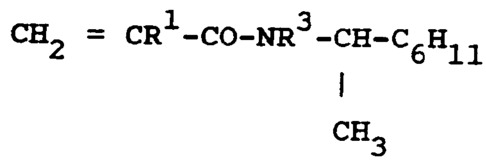

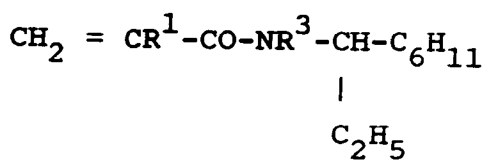

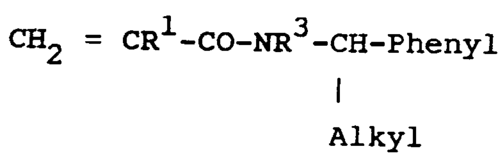

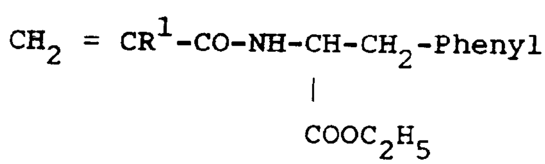

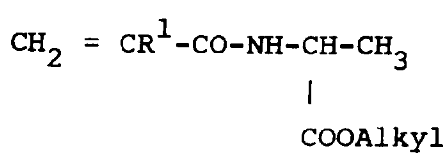

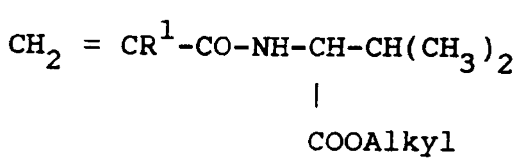

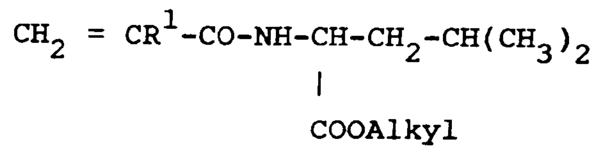

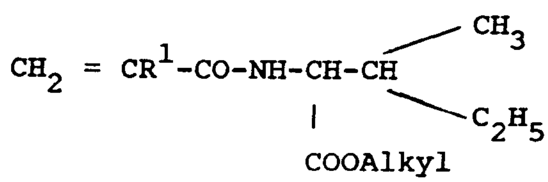

$CH_2 = CR^1\text{-}CO\text{-}NR^3\text{-}$(tetra-O-acetylglucosyl)

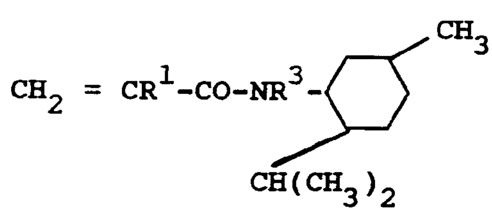

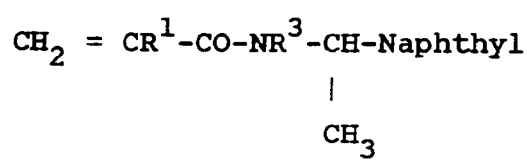

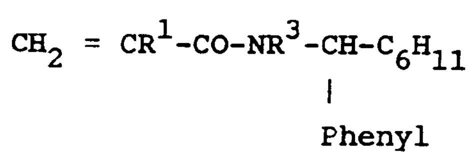

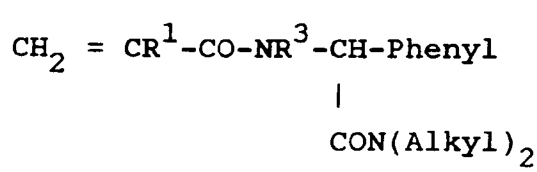

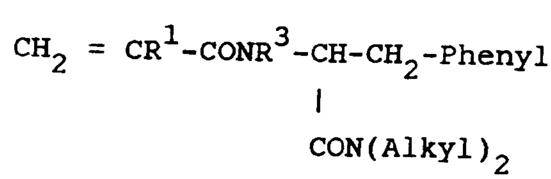

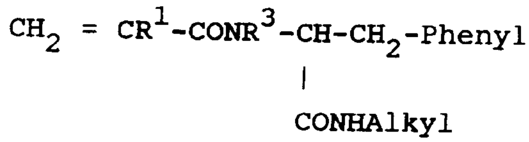

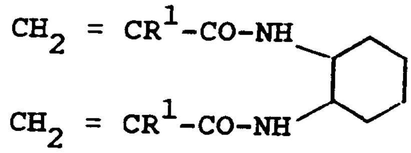

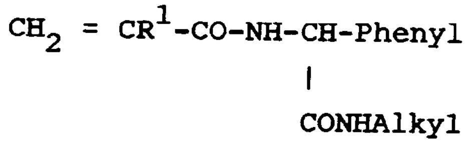

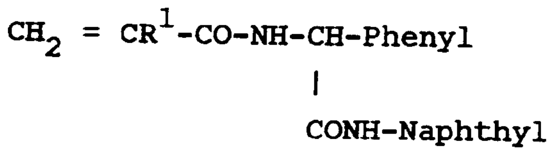

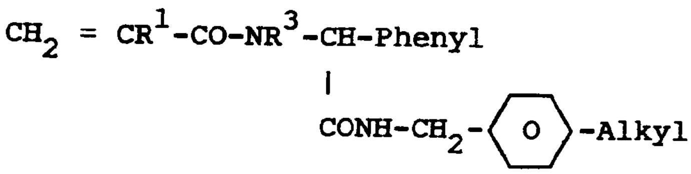

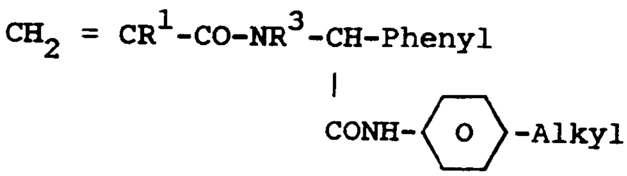

Die Verbindungen der Formel I, die zwei (Meth)Acrylamidreste enthalten, wie z.B. N,N'-Methylenbisacrylamid oder N,N'-1,2-Cyclohexylenbisacrylamid, können als chirale Quervernetzer auch zusätzlich zu anderen Monomeren eingesetzt werden.

Die Verbindungen der Formel I können allgemein hergestellt werden durch Umsetzen der entsprechenden Amine oder Aminosäurederivate HX mit reaktionsfähigen Methacrylsäure- oder Acrylsäurederivaten, vorzugsweise in Gegenwart eines Polymerisationsinhibitors bei Temperaturen zwischen etwa -5° und 60 °C.

Vorteilhafterweise arbeitet man bei 0 bis 15 °C unter Vervendung eines inerten organischen Lösungsmittels, insbesondere eines aromatischen Kohlenwasserstoffs (z.B. Toluol), eines Halogenkohlenwasserstoffs wie Methylenchlorid oder Chloroform. Die Reaktionszeiten liegen zwischen etwa 30 Minuten und 4 Stunden und hängen im wesentlichen von der Reaktionstemperatur ab. Die Reaktionsbedingungen sind in der Literatur vielfältig beschrieben.

Vorzugsweise sind die optisch aktiven Polyamide an hydrophile Kieselgele gebunden. Dabei sind mit Diol-, $NH_2$- oder Cyano-Gruppe modifizierte Kieselgele bevorzugt. Insbesondere sind die diolgruppenhaltigen Kieselgele bevorzugt. Derartig modifizierte Kieselgele für DC und HPTLC sind bekannt und im Handel erhältlich. Es sind jedoch auch andere Trägermaterialien, z.B. Aluminiumoxide oder Titanoxide, einsetzbar.

Die Herstellung dieser an Kieselgel gebundenen Polyamide auf zwei verschiedenen Wegen ist in der DE-OS 36 19 303 genau beschrieben. Die eine Verfahrensvariante besteht darin, daß man direkt ein hydrophiles Kieselgel mit Monomeren der Formel I unter den üblichen Bedingungen einer Polymerisationreaktion umsetzt.

Bei der zweiten Variante wird zunächst eine Modifizierung des Kieselgels mit einem (Meth)Acrylsäurederivat durchgeführt, vorzugsweise eine Veresterung, und anschließend wird dieses Material in Suspension mit einem Monomeren der Formel I radikalisch copolymerisiert, wobei das Polymer kovalent an das Kieselgel gebunden wird.

Die Reaktionsbedingungen kann der Fachmann der o.g. Literatur entnehmen.

Das erfindungsgemäße Verfahren zur Herstellung der DC-Trennmaterialien wird folgendermaßen durchgeführt.

Das optisch aktive Poly(meth)acrylamidderivat-Kieselgel-Verbundmaterial wird zusammen mit dem Bindersystem in einem wäßrigen oder wäßrig/organischen Medium suspendiert. Das Bindemittelsystem ist ein Gemisch aus zwei verschiedenen Sorten von allgemein bekannten Bindemitteln. Das eine Mittel basiert auf Polymeren von Acrylsäureestern, das zweite auf Polyvinylpolymerisaten, die Carboxylgruppen enthalten, und die gegebenenfalls in Salzform vorliegen.

Überraschenderweise wurde gefunden, daß das Gemisch dieser beiden Bindemittelsorten stabile, harte und abriebfeste Schichten mit glatter Oberfläche liefert.

Das Verhältnis von Bindemittel 1 (Acrylsäureester-Polymer) zu Bindemittel 2 (Carboxy-Vinyl-Polymer) kann von 4:1 bis 1:2 gewählt werden; vorzugsweise wird ein Verhältnis von 1:1 eingesetzt.

Das Suspensionsmedium kann entweder nur wäßrig oder wäßrig/organisch sein, wobei als organische Lösungsmittel vorzugsweise Alkohole, wie z.B. Ethanol, Methanol oder Propanol, eingesetzt werden.

Das Verhältnis Wasser zu organischem Lösungsmittel kann beliebig gewählt werden. Vorzugsweise wird ein Verhältnis 1:20 bis 1:5 gewählt.

Selbstverständlich sind auch rein organische Lösungsmittel geeignet.

Bei der Herstellung dieser Suspension kann, falls gewünscht, ein Fluoreszenzindikator an dieser Stelle des Verfahrens eingerührt werden. Es kommen hierfür die dem Fachmann allgemein bekannten Indikatoren in Frage.

Der am häufigsten verwendete Indikator ist ein Fluoreszenzindikator, vorzugsweise das bei 254 nm im UV absorbierende Magnesiumwolframat oder ein manganaktiviertes Zinksilicat.

Der pH-Wert der Suspension wird dann auf einen Wert im Bereich von 6,5-8,0 eingestellt. Bevorzugt ist der pH-Bereich 6,7-7,5.
Dabei tritt eine merkliche Verdickung der Suspension ein. Die Suspension wird dann nach bekannter Art und Weise auf den Träger gestrichen. Als Träger kommen neben den bevorzugten Glasplatten auch z.B. Folien aus Aluminium oder Kunststoff in Frage.

Die Schichtdicke der chiral modifizierten Kieselgelschicht der erfindungsgemäßen Trennmaterialien liegt wie bei den üblichen DC- bzw. HPTLC-Trennmaterialien normalerweise in einer Größenordnung von 100 bis 300 µm.

In Ausnahmefällen oder für spezielle Anwendungen können jedoch auch Trennmaterialien mit dünneren oder dickeren Schichten hergestellt werden.

Die erfindungsgemäßen Materialien ermöglichen eine schnelle Trennung von racemischen Gemischen. Diese chiral modifizierten Dünnschichtplatten können hervorragend als Pilotmethode für die Optimierung analoger HPLC-Trennungen, für die schnelle Prozeßkontrolle stereoselektiver Synthesen sowie für die Serienanalytik von Pharmaka eingesetzt werden.

Als Fließmittel eignen sich flüssige Kohlenwasserstoffe wie Hexan, Heptan, Octan, Ether sowie C1-C4-Alkohole, insbesondere deren Mischungen. Auch alkoholische/wäßrige Umkehrphasen sind gut geeignet. Gegebenenfalls können den Kohlenwasserstoffen und Alkoholen auch niedere Halogenkohlenwasserstoffe wie Dichlormethan oder Chloroform beigemischt werden.

Ein weiterer Vorteil der erfindungsgemäßen Materialien liegt darin, daß die zu trennenden Substanzen direkt ohne weitere Derivatisierung eingesetzt werden können.

Folgende Beispiele sollen die Erfindung näher erläutern.

Herstellung erfindungsgemäßer Platten:

<u>Beispiel 1</u>

150 Volumenteile (VT) Wasser, 15 VT Ethanol, 1,2 VT Acronal® 27 D (Feststoffgehalt 40 %) und 0,5 Gewichtsteile (GT) Carbopol® 940 werden 30 Minuten beim Raumtemperatur in einem Hochleistungsrührgerät gerührt.

Danach gibt man 50 GT Poly-(1-Cyclohexylethyl)acrylamid-Kieselgel-Verbundmaterial (hergestellt nach DE-OS 36 19 303 durch in-situ-Polymerisation eines HPTLC-Kieselgel 60-Diol-Materials (ca. 6 µm) mit (S)-(+)-1-Cyclohexylethylacrylamid in Gegenwart eines Radikalbildners) sowie, falls gewünscht, 1 GT Fluoreszenzindikator (bei 254 nm im UV absorbierend) hinzu und rührt weitere 30 Minuten. Man bestimmt den pH-Wert und neutralisiert mit 2 N NaOH bis pH 7,0. Hierbei tritt eine merkliche Verdickung der Suspension ein.

Man rührt weitere 90 Minuten, evakuiert, belüftet und streicht dann nach bekannter Art und Weise die DC-platten aus.

Nach einstündiger Trocknung bei ca. 100 °C sind die Platten gebrauchsfähig.

Beispiel 2

Analog Beispiel 1 wird eine erfindungsgemäße Platte hergestellt, wobei anstelle des Poly(1-Cyclohexylethyl)acrylamid-Kieselgel-Verbundmaterials ein Poly(L-Phenylalanylethylester)acrylamid-Kieselgel-Verbundmaterial eingesetzt wird.

Beispiel 3

Analog Beispiel 1 wird eine erfindungsgemäße Platte hergestellt, wobei anstelle des dort eingesetzten Kieselgel-Verbundmaterials ein Poly-L-Menthylacrylamid-Kieselgel-Verbundmaterial eingesetzt wird.

Beispiel 4

Analog Beispiel 1 wird eine erfindungsgemäße Platte hergestellt, wobei jedoch der pH-Wert auf 6,5 eingestellt und 60 Minuten nachgerührt wird.

Beispiel 5

Man stellt eine erfindungsgemäße Platte analog Beispiel 2 her, benutzt dabei jedoch folgende Binderkombination: 1,8 ml Acronal® 27 D und 0,25 g Carbopol®. Man stellt dabei einen pH-Wert von 7,5 ein und rührt ca. 120 Minuten nach.

Beispiel 6

Analog Beispiel 1 wird eine erfindungsgemäße Platte hergestellt, wobei jedoch ein Poly(N-Acryloyl-L-Phenylalanin-diethylamid)-Kieselgel-Verbundmaterial eingesetzt wird.

Beispiel 7

Analog Beispiel 1 wird eine Platte hergestellt, wobei jedoch anstelle des reinen Poly(1-cyclohexylethyl)acrylamid-Kieselgel-Verbundmaterials ein analoges Material eingesetzt wird, das durch in-situ-Polymerisation eines HPTLC-Kieselgel 60-Diol-Materials mit einer Mischung aus 90 % (S)-(+)-1-Cyclohexylethylacrylamid und 10 % N,N'-(S,S)-1,2-Cylcohexylen-bis-acrylsäureamid (Quervernetzer) hergestellt wird.

Anwendungsbeispiele

Beispiel 4

Mittels der in Beispiel 1 beschriebenen HPTLC-Platte wurden folgende racemische Verbindungen getrennt.

| Substanz (R,S)-Verbindung | Laufmittel | Rf-Werte |
|---|---|---|
| (R,S)-Cyclopenthiazid | n-Hexan/Dioxan 20/80 | 0,36 0,43 |
| (R,S)-Pentflutizid | n-Hexan/Dioxan 35/65 | 0,21 0,31 |

Beispiel 5

Mittels der in Beispiel 2 beschriebenen HPTLC-Platte wurden folgende racemische Verbindungen getrennt.

| Substanz (R,S)-Verbindung | Laufmittel | Rf-Werte |
|---|---|---|
| (R,S)-Chlorthalidon | n-Hexan/Dioxan 20/80 | 0,50 0,57 |
| (R,S)-N-Benzoyl-N'-(2-phenyl)butanoyl-harnstoff | tert. Butylmethyl-ether/THF 80/20 | 0,53 0,70 |
| (R,S)-2-(tert.Butyl)-5-oxo-oxazolidin-3-carbonsäure-benzylester | n-Hexan/Dioxan 80/20 | 0,63 0,67 |
| (R,S)-3-Benzoyl-2-(tert.butyl)-oxazo-lidin-5-on | n-Hexan/Dioxan 80/20 | 0,51/0,64 |

**Patentansprüche**

1. Trennmaterialien für die Dünnschichtchromatographie auf Basis von mit Sorptionsmittel beschichteten Trägern, dadurch gekennzeichnet, daß das Sorptionsmittel im wesentlichen aus an Kieselgel gebundenen optisch aktiven Poly(meth)acrylsäureamiden und einem Bindersystem, bestehend aus einem Gemisch aus carboxylgruppenhaltigen Polyvinyl- und Acrylsäureester-Polymeren, besteht.

2. Trennmaterialien nach Anspruch 1, dadurch gekennzeichnet, daß die optisch aktiven Poly(meth)acrylsäureamide aus polymerisationsfähigen Verbindungen der Formel I

$$CH_2=CR^1\text{-CO-X} \qquad I$$

worin

$R^1$ H oder Methyl

und

-X ein über den Stickstoff gebundener, aliphatischer oder aromatischer Amidrest, enthaltend mindestens ein optisch aktives C-Atom, der auch durch einen weiteren (Meth)Acrylamidrest substituiert sein kann, ein über den Stickstoff gebundenes, optisch aktives Aminosäurederivat
oder
$NR^2Y$, wobei $R^2$ H oder Alkyl mit bis zu 5 C-Atomen und Y ein Mono- oder Oligosaccharid-Rest bedeutet, erhältlich sind.

**3.** Verfahren zur Herstellung von Trennmaterialien nach Anspruch 1, dadurch gekennzeichnet, daß man das optisch aktive Poly(meth)acrylamidderivat-Kieselgel-Verbundmaterial, hergestellt durch Umsetzung von Kieselgel oder hydrophil modifiziertem Kieselgel mit optisch aktiven Monomeren der Formel 1 unter den Bedingungen einer Polymerisationsreaktion, zusammen mit dem Bindersystem, bestehend aus einem Gemisch aus carboxylgruppenhaltigen Polyvinyl- und Acrylsäureester-Polymeren, in einem wäßrigen, organischen oder wäßrig/organischen Medium suspendiert, den pH-Wert der Suspension auf einen Wert zwischen 6,5 und 8,0 einstellt und diese Suspension nach bekannter Art und Weise auf den Träger aufbringt.

**4.** Verwendung der Trennmaterialien nach Anspruch 1 oder 2 zur chromatographischen Trennung von racemischen Gemischen in die optischen Antipoden.

**5.** An Kieselgel gebundene optisch aktive Poly(meth)acrylsäureamide, geeignet zur Herstellung von Trennmaterialien nach Anspruch 1, erhältlich aus polymerisationsfähigen Verbindungen der Formel I,

$$CH_2=CR^1\text{-}CO\text{-}X \qquad I$$

worin
$R^1$ H oder $CH_3$
und
X entweder
a) $NR^2Y$, wobei $R^2$ H oder Alkyl mit bis zu 5 C-Atomen und Y einen Mono- oder Oligosaccharid-Rest bedeuten,
oder
b) ein über den Stickstoff gebundener aliphatischer Amidrest $-NR^3R^4$ bedeutet,
worin
$R^3$ und $R^4$ jeweils unabhängig voneinander
Alkyl mit 1-8 C-Atomen, worin gegebenenfalls ein oder zwei nicht benachbarte $CH_2$-Gruppen durch -O-, -CO-, -OCO- oder -CO-O- ersetzt sein können, oder Cycloalkyl mit 3-7 C-Atomen oder Cycloalkylalkyl mit 4-11 C-Atomen oder Bicycloalkyl mit 7-14 C-Atomen oder Bicycloalkylalkyl mit 8-18 C-Atomen oder Phenyl oder Naphthyl oder Phenylalkyl mit 7-14 C-Atomen oder Naphthylalkyl mit 8-18 C-Atomen bedeuten, wobei diese Reste ferner ein- oder mehrfach substituiert sein können durch Alkyl, Cycloalkyl, Cycloalkylalkyl, Halogen, Cyano, Amino, mono- oder disubstituiertes Amino und/oder Hydroxy bedeuten, und wobei beide Reste $R^3$ und $R^4$ jeweils mindestens ein optisch aktives C-Atom enthalten,
oder
c) ein über den Stickstoff gebundenes, optisch aktives Aminosäureamid
bedeuten.

**6.** An Kieselgel gebundene optisch aktive Poly(meth)acrylsäureamide nach Anspruch 5 (Teil a)), gekennzeichnet durch die nachstehende Formel, worin
$R^1$ H oder $CH_3$
und
$R^3$ H oder Alkyl mit 1-8 C-Atomen, worin gegebenenfalls ein oder zwei nicht benachbarte $CH_2$-Gruppen durch -O-, -CO-, -OCO- oder -CO-O- ersetzt sein können, oder Cycloalkyl mit 3-7 C-Atomen oder Cycloalkylalkyl mit 4-11 C-Atomen oder Bicycloalkyl mit 7-14 C-Atomen oder Bicycloalkylalkyl mit 8-18 C-Atomen oder Phenyl oder Naphthyl oder Phenylalkyl mit 7-14 C-Atomen oder Naphthylalkyl mit 8-18 C-Atomen bedeuten, wobei diese Reste ferner ein- oder mehrfach substituiert sein können durch Alkyl, Cycloalkyl, Cycloalkylalkyl, Halogen, Cyano, Amino, mono- oder disubstituiertes Amino und/oder Hydroxy bedeuten,
bedeuten:

$$CH_2 = CR^1\text{-}CO\text{-}NR^3\text{-(tetra-O-acetylglucosyl)}$$

**7.** An Kieselgel gebundene optisch aktive Poly(meth)acrylsäureamide nach Anspruch 5 (Teil b), ausgewählt aus den folgenden Verbindungen, worin $R^1$ und $R^3$ die in Anspruch 5 genannten Bedeutungen besitzen:

$CH_2 = CR^1\text{-}CO\text{-}NR^3\text{-}CH\text{-}Phenyl$
|
$CH_3$

$CH_2 = CR^1\text{-}CO\text{-}NR^3\text{-}CH\text{-}C_6H_{11}$
|
$CH_3$

$CH_2 = CR^1\text{-}CO\text{-}NR^3\text{-}CH\text{-}C_6H_{11}$
|
$C_2H_5$

$CH_2 = CR^1\text{-}CO\text{-}NR^3\text{-}CH\text{-}Phenyl$
|
Alkyl

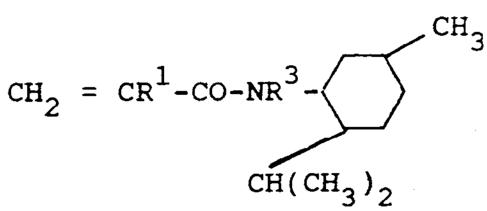

$CH_2 = CR^1\text{-}CO\text{-}NR^3\text{-}CH\text{-}Naphthyl$
|
$CH_3$

$CH_2 = CR^1\text{-}CO\text{-}NR^3\text{-}CH\text{-}C_6H_{11}$
|
Phenyl

**8.** An Kieselgel gebundene optisch aktive Poly(meth)acrylsäureamide nach Anspruch 5 (Teil c)), ausgewählt aus den folgenden Verbindungen, worin

$R^1$ H oder $CH_3$

und

$R^3$ H oder Alkyl mit 1-8 C-Atomen, worin gegebenenfalls ein oder zwei nicht benachbarte $CH_2$-Gruppen durch -O-, -CO-, -OCO- oder -CO-O- ersetzt sein können, oder Cycloalkyl mit 3-7 C-Atomen oder Cycloalkylalkyl mit 4-11 C-Atomen oder Bicycloalkyl mit 7-14 C-Atomen oder Bicycloalkylalkyl mit 8-18 C-Atomen oder Phenyl oder Naphthyl oder Phenylalkyl mit 7-14 C-Atomen oder

Naphthylalkyl mit 8-18 C-Atomen bedeuten, wobei diese Reste ferner ein- oder mehrfach substituiert sein können durch Alkyl, Cycloalkyl, Cycloalkylalkyl, Halogen, Cyano, Amino, mono- oder disubstituiertes Amino und/oder Hydroxy bedeuten,

bedeuten:

$CH_2 = CR^1-CO-NR^3-CH-Phenyl$
|
$CON(Alkyl)_2$

$CH_2 = CR^1-CONR^3-CH-CH_2-Phenyl$
|
$CON(Alkyl)_2$

$CH_2 = CR^1-CONR^3-CH-CH_2-Phenyl$
|
CONHAlkyl

$CH_2 = CR^1-CO-NH-CH-Phenyl$
|
CONHAlkyl

$CH_2 = CR^1-CO-NH-CH-Phenyl$
|
CONH-Naphthyl

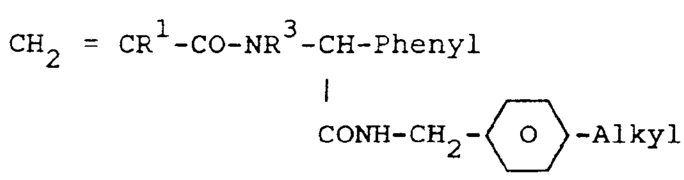

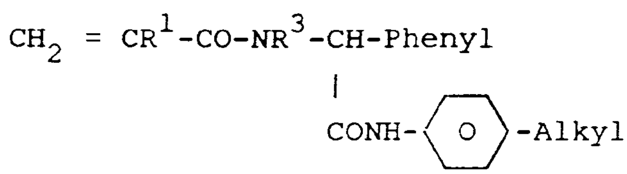

## Claims

1. Separating materials for thin-layer chromatography, based on sorbent-coated supports, characterised in that the sorbent essentially comprises optically active poly(meth)acrylamides bonded to silica gel, and a binder system comprising a mixture of carboxyl-containing polyvinyl and acrylate polymers.

2. Separating materials according to Claim 1, characterised in that the optically active poly(meth)acrylamides can be obtained from polymerisable compounds of the formula I

$$CH_2 = CR^1\text{-}CO\text{-}X \qquad I$$

in which

$R^1$ is H or methyl

and

-X is an aliphatic or aromatic amide radical which is bonded via the nitrogen and contains at least one optically active carbon atom, which may also be substituted by a further (meth)acrylamide radical,
an optically active amino acid derivative which is bonded via the nitrogen
or
$-NR^2Y$ where $R^2$ is H or alkyl having up to 5 carbon atoms and Y is a monosaccharide or oligosaccharide radical.

3. Process for the production of separating materials according to Claim 1, characterised in that the optically active poly(meth)acrylamide derivative/silica gel composite material, prepared by reacting silica gel or hydrophilically modified silica gel with optically active monomers of the formula I under the conditions of a polymerisation reaction, together with the binder system comprising a mixture of carboxyl-containing polyvinyl and acrylate polymers, is suspended in an aqueous, organic or aqueous/organic medium, the pH of the suspension is set to between 6.5 and 8.0, and this suspension is applied to the support in a conventional manner.

4. Use of the separating materials according to Claim 1 or 2, for the chromatographic separation of racemic mixtures into the optical antipodes.

5. Optically active poly(methacrylamides) bonded to silica gel, suitable for the production of separating materials according to Claim 1, obtainable from polymerisable compounds of the formula I

$$CH_2=CR^1\text{-}CO\text{-}X \qquad I$$

in which

$R^1$ is H or $CH_3$

and

X is either

a) $NR^2Y$ where $R^2$ is H or alkyl having up to 5 carbon atoms and Y is a monosaccharide or oligosaccharide radical,
or
b) an aliphatic amide radical $-NR^3R^4$ bonded via nitrogen,
in which
$R^3$ and $R^4$ are each, independently of one another,. alkyl having 1-8 carbon atoms in which one or two non-adjacent $CH_2$ groups may optionally be replaced by -O-, -CO-, -OCO- or -CO-O-, or cycloalkyl having 3-7 carbon atoms or cycloalkylalkyl having 4-11 carbon atoms or bicycloalkyl having 7-14 carbon atoms or bicycloalkyalkyl having 8-18 carbon atoms or phenyl or naphthyl or phenylalkyl having 7-14 carbon atoms or naphthylalkyl having 8-18 carbon atoms, where these radicals may furthermore be monosubstituted or polysubstituted by alkyl, cycloalkyl, cycloalkylalkyl, halogen, cyano, amino, monosubstituted or disubstituted amino and/or hydroxyl, and where each of the two radicals $R^3$ and $R^4$ contains at least one optically active carbon atom,
or
c) an optically active amino acid amide bonded via the nitrogen.

6. Optically active poly(meth)acrylamides bonded to silica gel according to Claim 5 (part a)), characterised by the formula below, in which

$R^1$ is H or $CH_3$

and

$R^3$ is H or alkyl having 1-8 carbon atoms in which one or two non-adjacent $CH_2$ groups may optionally be replaced by -O-, -CO-, -OCO- or -CO-O-, or cycloalkyl having 3-7 carbon atoms or cycloalkylalkyl having 4-11 carbon atoms or bicycloalkyl having 7-14 carbon atoms or bicycloalkylalkyl having 8-18 carbon atoms or phenyl or naphthyl or phenylalkyl having 7-14 carbon atoms or naphthylalkyl having 8-18 carbon atoms, where these radicals may furthermore be monosubstituted or polysubstituted by alkyl, cycloalkyl, cycloalkylalkyl, halogen, cyano, amino, monosubstituted or disubstituted amino and/or hydroxyl:

$CH_2 = CR^1$-CO-$NR^3$-(tetra-O-acetylglucosyl)

**7.** Optically active poly(meth)acrylamides bonded to silica gel according to Claim 5 (part b), selected from the following compounds, in which $R^1$ and $R^3$ are as defined in Claim 5:

$CH_2 = CR^1-CO-NR^3-CH-$Phenyl
|
$CH_3$

$CH_2 = CR^1-CO-NR^3-CH-C_6H_{11}$
|
$CH_3$

$CH_2 = CR^1-CO-NR^3-CH-C_6H_{11}$
|
$C_2H_5$

$CH_2 = CR^1-CO-NR^3-CH-$Phenyl
|
Alkyl

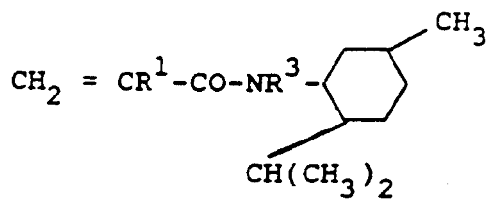

$CH_2 = CR^1-CO-NR^3-CH-$Naphthyl
|
$CH_3$

$$CH_2 = CR^1\text{-CO-NR}^3\text{-CH-}C_6H_{11}$$
|
Phenyl

**8.** Optically active poly(meth)acrylamides bonded to silica gel according to Claim 5 (part c)), selected from the following compounds, in which

$R^1$ is H or $CH_3$

and

$R^3$ is H or alkyl having 1-8 carbon atoms in which one or two non-adjacent $CH_2$ groups may optionally be replaced by -O-, -CO-, -OCO- or -CO-O-, or cycloalkyl having 3-7 carbon atoms or cycloalkylalkyl having 4-11 carbon atoms or bicycloalkyl having 7-14 carbon atoms or bicycloalkylalkyl having 8-18 carbon atoms or phenyl or naphthyl or phenylalkyl having 7-14 carbon atoms or naphthylalkyl having 8-18 carbon atoms, where these radicals may furthermore be monosubstituted or polysubstituted by alkyl, cycloalkyl, cycloalkylalkyl, halogen, cyano, amino, monosubstituted or disubstituted amino and/or hydroxyl:

$$CH_2 = CR^1\text{-CO-NR}^3\text{-CH-Phenyl}$$
|
CON(Alkyl)$_2$

$$CH_2 = CR^1\text{-CONR}^3\text{-CH-}CH_2\text{-Phenyl}$$
|
CON(Alkyl)$_2$

$$CH_2 = CR^1\text{-CONR}^3\text{-CH-}CH_2\text{-Phenyl}$$
|
CONHAlkyl

$$CH_2 = CR^1\text{-CO-NH-CH-Phenyl}$$
|
CONHAlkyl

$$CH_2 = CR^1\text{-CO-NH-CH-Phenyl}$$
|
CONH-Naphthyl

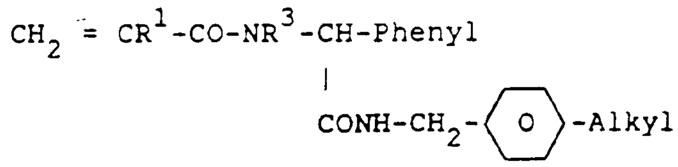

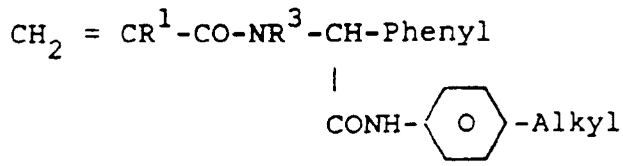

## Revendications

**1.** Matériaux de séparation pour la chromatographie en couche mince à base de supports revêtus d'un agent adsorbant, caractérisés en ce que l'agent adsorbant est essentiellement constitué de poly(méth)acrylamides optiquement actifs liés à un gel de silice et d'un système de liants, constitué d'un mélange de polymères de polyvinyles contenant des groupes carboxyles et de polymères d'acrylates.

**2.** Matériaux de séparation selon la revendication 1, caractérisés en ce que les poly(méth)acrylamides optiquement actifs sont obtenus à partir des composés de formule I polymérisables

$$CH_2=CR^1\text{-}CO\text{-}X \qquad I$$

où

$R^1$ représente H ou le méthyle

et

X un reste amide aliphatique ou aromatique, lié par l'azote, contenant au moins un atome de C optiquement actif, pouvant être également substitué par un autre reste (méth)acrylamide, un dérivé d'amino-acide optiquement actif, lié par l'azote ou

$NR^2Y$, $R^2$ représentant H ou un alkyle ayant jusqu'à 5 atomes de C et Y un reste mono- ou oligosaccharide.

**3.** Procédé pour la préparation de matériaux de séparation selon la revendication 1, caractérisé en ce que l'on met en suspension le matériau composite dérivé de poly(méth)acrylamide optiquement actif/gel de silice, préparé par réaction d'un gel de silice ou d'un gel de silice modifié pour être rendu hydrophile avec des monomères de formule I optiquement actifs dans les conditions d'une réaction de polymérisation, avec le système de liants constitué d'un mélange de polymères de polyvinyles contenant des groupes carboxyles et de polymères d'acrylates dans un milieu aqueux, organique ou aqueux-organique, en ce que l'on ajuste le pH de la suspension à une valeur comprise entre 6,5 et 8,0 et en ce que l'on applique cette suspension, d'une façon connue en soi, sur le support.

**4.** Utilisation des matériaux de séparation selon la revendication 1 ou 2 pour séparer par chromatographie les mélanges racémiques en antipodes optiques.

**5.** Les poly(méth)acrylamides optiquement actifs liés à un gel de silice, convenant pour la préparation des matériaux de séparation selon la revendication 1, obtenus à partir des composés de formule I polymérisables

$$CH_2=CR^1\text{-}CO\text{-}X \qquad I$$

où

$R^1$ représente H ou $CH_3$

et

X représente soit

a) $NR^2Y$, $R^2$ représentant H ou un alkyle ayant jusqu'à 5 atomes de C et Y représentant un reste mono- ou oligosaccharide,

ou soit

b) un reste amide $-NR^3R^4$ aliphatique lié par l'azote
où
$R^3$ et $R^4$ représentent, indépendamment l'un de l'autre, un alkyle ayant 1 à 8 atomes de C dans lequel un ou deux groupes $CH_2$ non contigus sont éventuellement remplacés par -O-, -CO-, -OCO- ou -CO-O- ou un cycloalkyle ayant 3 à 7 atomes de C ou un cycloalkylalkyle ayant 4 à 11 atomes de C ou un bicycloalkyle ayant 7 à 14 atomes de C ou un bicycloalkylalkyle ayant 8 à 18 atomes de C ou un phényle ou un naphtyle ou un phénylalkyle ayant 7 à 14 atomes de C ou un naphtylalkyle ayant 8 à 18 atomes de C, ces restes pouvant être, en outre, mono- ou polysubstitués par un alkyle, un cycloalkyle, un cycloalkylalkyle, un halogène, un cyano, un amino, un amino mono- ou disubstitué et/ou un hydroxy et les deux restes $R^3$ et $R^4$ contenant au moins un atome de C optiquement actif,
ou
c) un amide d'amino-acide optiquement actif, lié par l'azote.

**6.** Les poly(méth)acrylamides optiquement actifs selon la revendication 5 (partie a), liés à un gel de silice, caractérisés en ce qu'ils répondent à la formule ci-après, dans laquelle
$R^1$ représente H ou $CH_3$
et
$R^3$ représente H ou un alkyle ayant 1 à 8 atomes de C dans lequel un ou deux groupes $CH_2$ non contigus peuvent être éventuellement remplacés par -O-, -CO-, -OCOou -CO-O- ou un cycloalkyle ayant 3 à 7 atomes de C ou un cycloalkylalkyle ayant 4 à 11 atomes de C ou un bicycloalkyle ayant 7 à 14 atomes de C ou un bicycloalkylalkyle ayant 8 à 18 atomes de C ou un phényle ou un naphtyle ou un phénylalkyle ayant 7 à 14 atomes de C ou un naphtylalkyle ayant 8 à 18 atomes de C, les restes pouvant être, en outre, mono- ou polysubstitués par un alkyle, un cycloalkyle, un cycloalkylalkyle, un halogène, un cyano, un amino, un amino mono- ou disubstitué et/ou un hydroxy

$$CH_2=CR^1\text{-CO-}NR^3\text{-(tétra-O-acétylglucosyle).}$$

**7.** Les poly(méth)acrylamides optiquement actifs selon la revendication 5 (partie b), liés à un gel de silice, choisis parmi les composés suivants dans lesquels $R^1$ et $R^3$ ont les significations données dans la revendication 5

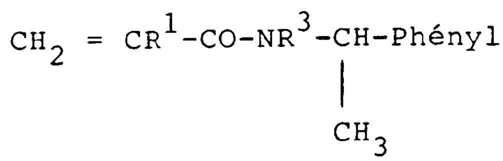

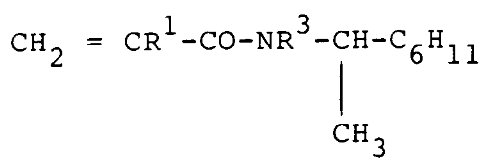

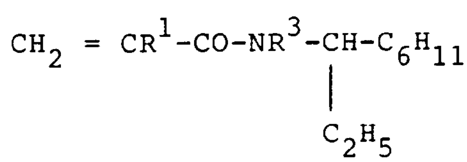

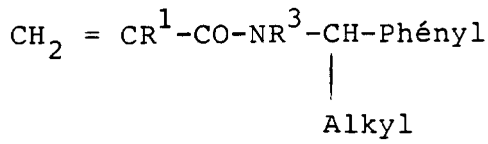

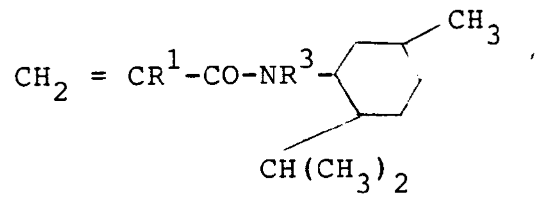

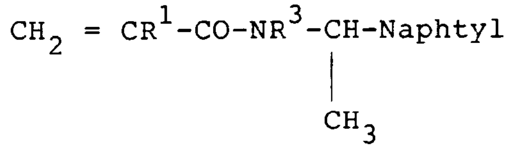

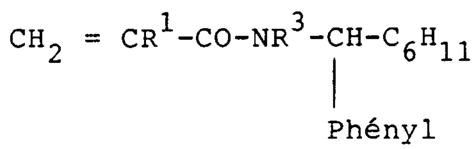

8. Les poly(méth)acrylamides optiquement actifs selon la revendication 5 (partie c), liés à un gel de silice, choisis parmi les composés suivants dans lesquels
$R^1$ représente H ou $CH_3$
et
$R^3$ représente H ou un alkyle ayant 1 à 8 atomes de C dans lequel un ou deux groupes $CH_2$ non contigus peuvent être éventuellement remplacés par -O-, -CO-, -OCO-ou -CO-O- ou un cycloalkyle ayant 3 à 7 atomes de C ou un cycloalkylalkyle ayant 4 à 11 atomes de C ou un bicycloalkyle ayant 7 à 14 atomes de C ou un bicycloalkylalkyle ayant 8 à 18 atomes de C ou un phényle ou un naphtyle ou un phénylalkyle ayant 7 à 14 atomes de C ou un naphtylalkyle ayant 8 à 18 atomes de C, ces restes pouvant être, en outre, mono- ou polysubstitués par un alkyle, un cycloalkyle, un cycloalkylalkyle, un halogène, un cyano, un amino, un amino mono- ou disubstitué et/ou un hydroxy,